# EUROPÄISCHE PATENTANMELDUNG

(11) **EP 2 332 802 A1**
(43) Veröffentlichungstag der Anmeldung: **15.06.2011**
(21) Anmeldenummer: 09178603.8
(22) Anmeldetag: 10.12.2009
(51) Int. Cl.: B61F 5/52, B60R 13/08, B60B 17/00

(54) **Absorptionsvorrichtung auf schwingenden Oberflächen, insbesondere bei Schienenfahrzeugen und Schienenstrecken**

(71) Anmelder: Zingelmann, Jochen, 53639 Königswinter (DE); Glasner, Gerd, 53819 Neunkirchen-Seelscheid (DE)
(72) Erfinder: Zingelmann, Jochen, 53639 Königswinter (DE); Glasner, Gerd, 53819 Neunkirchen-Seelscheid (DE)
(74) Vertreter: von Kreisler Selting Werner

(57) **Zusammenfassung**

Die Absorptionsbeschichtung auf schwingenden Oberflächen, insbesondere bei Schienenfahrzeugen und Schienenstrecken, ist versehen mit einem in Schwingung versetzbaren Bauteil (16,18), das eine Oberfläche (20,24,28,30) aufweist, und einem geschlossenzelligen Elastomerschaum (42) auf zumindest einem Teilbereich der Bauteil-Oberfläche (20,24,28,30), wobei der Elastomerschaum (42) innerhalb des Teilbereichs mit der Oberfläche (20,24,28,30) des Bauteils (16,18) stoffschlüssig verbunden ist.

## Beschreibung

Die Erfindung betrifft eine Absorptionsbeschichtung auf schwingenden Oberflächen, mit der neben einem Schutz der Oberfläche vor mechanischen Beschädigungen und Korrosion vor allem eine Reduktion der Schwingungen und damit von Körperschallerzeugung und in der Folge davon von Luftschallerzeugung erzielt werden soll.

In modernen mobilen Gesellschaften gewinnt der Schallemissionsschutz (Lärmschutz) eine immer bedeutendere Rolle, Denn mit zunehmender Mobilität erhöht sich die Anzahl und der Umfang an Transportmitteln und Transportwegen. Aus ökologischen Gründen wird hierbei dem Ausbau des Schienenstreckennetzes mehr und mehr Bedeutung beigemessen. Gerade bei Schienenfahrzeugen und Schienenstrecken aber sind die Schallemissionen nicht unerheblich. Maßnahmen zum Schallschutz sind beispielsweise Schallschutzwände, die jedoch wegen ihrer mitunter nur begrenzten Wirksamkeit insbesondere aufgrund ihres optischen Erscheinungsbildes und je nach der Geländesituation wegen der Sichteinschränkungen auf nur geringe Akzeptanz stoßen.

Schall wird beispielsweise durch schwingende Oberflächen erzeugt. Derartige schwingende Oberflächen entstehen insbesondere in dynamischen Systemen. Daher ist es angezeigt, durch Dämpfung der Schwingungen die Entstehung von Körperschall und damit von Luftschall zu minimieren.

Beispielsweise ist es bekannt, bei Güterwagendrehgestellen die Lärmemission zu vermindern. Diesbezüglich ist in DE-A-102 41 755 beschrieben, die Radscheiben und Wellen von Radsätzen und Drehgestellrahmen mit schallabsorbierenden weichen Schallschutzbeschichtungen zu versehen. Als Beschichtungsmaterial wird hier vorzugsweise Polyuhrethan vorgeschlagen.

Aufgabe der Erfindung ist es, eine Absorptionsbeschichtung auf schwingenden und/oder für schwingende Oberflächen zu schaffen, insbesondere für Schienenfahrzeuge und Schienenstrecken, wobei die Schwingungsabsorptionsbeschichtung auf einfache Weise aufbringbar und hochwirksam ist.

Zur Lösung dieser Aufgabe wird mit der Erfindung eine Absorptionsvorrichtung auf schwingenden bzw. für schwingende Oberflächen, insbesondere bei Schienenfahrzeugen und Schienenstrecken, vorgeschlagen, wobei die Schwingungsabsorptionsvorrichtung versehen ist mit
- einem in Schwingung versetzbaren Bauteil, das eine Oberfläche aufweist, und
- einem geschlossenzelligen Elastomerschaum auf zumindest einem Teilbereich der Bauteil-Oberfläche,
- wobei der Elastomerschaum innerhalb des Teilbereichs mit der Oberfläche des Bauteils stoffschlüssig verbunden ist.

Erfindungsgemäß wird als schwingungsabsorbierende Beschichtung der schwingenden Oberfläche eines Bauteils ein geschlossenzelliger Elastomerschaum vorgeschlagen, der zumindest teilweise auf der Bauteil-Oberfläche aufgebracht ist. Dabei ist der Elastomerschaum stoffschlüssig mit dem Bauteil verbunden. Dies erfolgt vorzugsweise durch eine Klebeverbindung. Durch die geschlossenzellige Struktur wird ein direkter Durchgang für durch die schwingende Oberfläche angeregte Luft durch den Schaum verhindert.

Bei dem geschlossenzelligen Elastomerschaum handelt es sich insbesondere um ein hochreißfestes elastisches Material, das neben seinen erfindungsgemäß genutzten Eigenschaften der Schwingungsdämpfung auch eine erhöhte Schutzwirkung gegen Korrosion sowie mechanischen Beschädigungen aufweist und als Rutschhemmung wirkt. Durch seine hohe Elastizität des Elastomerschaums schützt dieser die beschichteten Bauteile vor Aufprallschäden, wobei er weiterhin die Oberflächen-Analyse auf Schäden mit Hilfe von Ultraschall oder Röntgenstrahlen sowie die Kontrolle auf Beschädigung der Beschichtung durch optische Inspektion erlaubt.

Unter "geschlossenzellig" im Sinne der Erfindung wird ein Elastomerschaum verstanden, der (hermetisch) geschlossene Luft- bzw. Gaszellen aufweist, die in keinerlei Fluidverbindung miteinander stehen. Bei dem Elastomerschaum handelt es sich vornehmlich um einen Integralschaum, der eine geschlossene äußere Haut bildet. Die Startzeit kann auf bis zu 60 sec eingestellt werden. "Stoffschlüssig" besagt im Rahmen der Erfindung insbesondere, dass die Grenzschicht zwischen der schwingenden Oberfläche und dem Elastomerschaum (bzw, einem Klebstoff, mit dem der Schaum mit der schwingenden Oberfläche verbunden ist) im Wesentlichen frei von Feststoffphasen ist, so dass der Elastomerschaum an der Oberfläche durch Adhäsion infolge von Van der Waalschen Kräften haftet. Zusätzlich ist der Polymerschaum bzw. Klebstoff in der (sofern vorhandenen) Mikrostruktur der schwingenden Oberfläche verhakt.

Infolge seiner geschlossenzelligen Struktur nimmt der Schaum keinerlei Feuchtigkeit auf bzw. gibt diese in jedem Fall nicht an die beschichtete Oberfläche des Bauteils ab, so dass dieses gegenüber Luft und Wasser abgedichtet ist. Durch entsprechende chemische Zusammensetzung bzw. Additive lässt sich der erfindungsgemäß eingesetzte geschlossenzellige Elastomerschaum gegen UV-Strahlung schützen. Alternativ ist es möglich, den UV-Schutz bzw. die anderen zuvor beschriebenen Schutzfunktionen durch eine weitere auf den Elastomerschaum aufgebrachte Schutzschicht zu realisieren. Diese Schutzschicht weist ebenfalls insbesondere elastomeres Material auf. Ferner ist es möglich, die Schutzschicht inert gegenüber den herkömmlichen Gefahrgütern oder anderen chemische Einflüssen auszubilden. Aus Brandschutzgründen sollte der Elastomerschaum insbesondere mineralische Additive aufweisen.

Als erfindungsgemäß einzusetzender Elastomerschaum eignet sich insbesondere ein Schaum mit einem Porenvolumen von 5 % bis zu 60 %, vorzugsweise von 5 % bis 40 %. Die Dichte des Elastomerschaums beträgt vorzugsweise bis zu 1 g/cm³ und insbesondere liegt sie zwischen 0,5 bis 0,7 g/cm³.

Durch seine stoffschlüssige Verbindung mit der in Schwingung versetzbaren Oberfläche des Bauteils entsteht ein kraftschlüssiger Verbund zwischen dem Elastomerschaum und dem Bauteil, was zwingend erforderlich ist, damit die Entstehung von Körperschall reduziert wird. Der Elastomerschaum weist daher vorzugsweise einen schaumbildenden Klebstoff aus elastomerem Material auf. Beim Auftragen dieses Elastomerschaums (beispielsweise durch Aufsprühen oder Auftragen mit einem Auftragswerkzeug wie einer Rakel oder dergleichen) verbindet der sich Elastomerschaum aufgrund seiner Klebewirkung direkt mit der Oberfläche des Bauteils.

Alternativ ist es möglich, dass die Elastomerschaumbeschichtung als vorgefertigter Formkörper ausgebildet ist, der mit Hilfe eines Klebstoffs mit der Oberfläche des Bauteils verklebt wird. Der Klebstoff weist vorzugsweise ebenfalls einen geschlossenzelligen Elastomerschaum auf.

Die Anwendung der erfindungsgemäßen Absorptionsbeschichtung auf schwingenden Oberflächen ist, wie eingangs bereits angedeutet, vielfältig. Bevorzugte Anwendungen sind darin zu sehen, dass
- das Bauteil eine Schienenfahrzeugachse und die Oberfläche die Umfangsseite der Ache ist,
- das Bauteil ein Schienenfahrzeugrad und die Oberfläche die Innenseite und/oder die Außenseite des Rades ist,
- das Bauteil ein Wasserfahrzeugrumpf und die Oberfläche die Innen- und/oder Außenseite des Rumpfs oder einer Zwischenwand des Rumpfs ist,
- das Bauteil ein Karosserieteil, insbesondere Unterboden, eines Land-, Wasser- oder Luftfahrzeuges und die Oberfläche eine Seite des Karosserieteil ist,
- das Bauteil eine Schiene und die Oberfläche die Innen- oder Außenseite des Schienensteges und/oder am Schienenfuß angeordnet ist,
- das Bauteil eine Metall- Bahnschwelle und die Oberfläche eine Fläche an der Bahnschwelle oder an einem Doppel-T-Träger der Bahnschwelle ist, wobei durch Beschichtung der auf dem Schotterkörper aufliegenden Unterseite des Doppel-T-Trägers zusätzlich eine rutschhemmende Wirkung entsteht,
- das Bauteil ein Maschinenteil und die Oberfläche eine Fläche des Maschinenteils ist,
- das Bauteil eine Schallschutzhaube, -schürze oder -kabine und die Oberfläche die Innen- und/oder Außenseite der Schallschutzhaube, -schürze bzw.-kabine ist,
- das Bauteil ein Baukörper wie z, B. Stahlbrückentrasse für eine Bahnstrecke oder ein Schotterkörper und die Oberfläche eine Seite des Baukörpers insbesondere die Unterseite der Stahlbrückentrasse bzw. die Oberseite des Schotterkörpers ist,
- das Bauteil ein dem Aufprall von Regentropen, Graupel oder Hagel aussetzbares Gebäudeteil wie z. B. eine Dachbedeckung oder ein Abdeckung für Horizontalflächen wie insbesondere eine Fensterbank und die Oberfläche die Innenseite bzw. Unterseite des Gebäudeteils insbesondere der Dachbedeckung und/oder der Fensterbank ist.

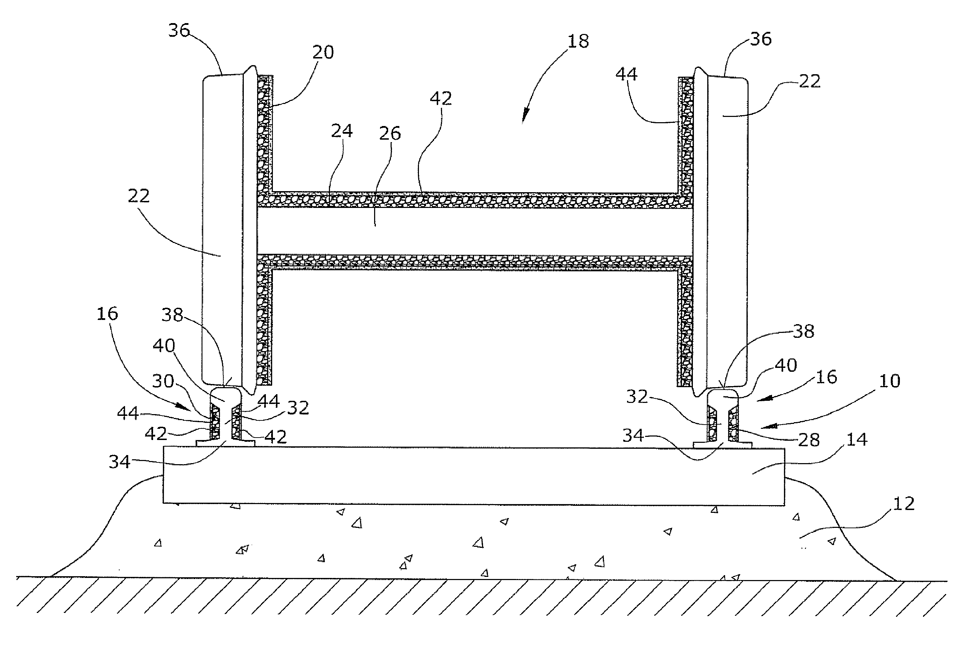

Die Erfindung wird nachfolgend anhand eines Ausführungsbeispiels sowie unter Bezugnahme auf die Zeichnung, in der ein Teilausschnitt eines Rad-Schiene-Transportsystems gezeigt ist, näher erläutert.

In der Zeichnung ist ein Gleis 10 gezeigt, das einen Gleisoberbau in Form eines Schotterkörpers 12 mit in diesem eingebetteten Schwellen 14 aufweist. Über die Schwellen 14 erstrecken sich zwei Schienen 16, auf denen Schienenfahrzeuge mit Radsätzen 18 in bekannter Weise fahren.

Beim Rollen der Radsätze 18 über die Schienen 16 entstehen an den Radsätzen 18 und den Schienen 16 (sowie an weiteren hier nicht näher spezifizierten Bauteilen wie beispielsweise an der Karosserie der Schienenfahrzeuge) Schwingungen, die Luftschall und damit Schallemissionen erzeugen. Erfindungsgemäß werden nun diese schwingenden Bauteile bzw. zumindest Teile ihrer schwingenden Oberflächen gedämpft, so dass bereits die Entstehung der Schwingungen (Körperschall) und in Folge dessen die Entstehung von Luftschall reduziert ist.

Schwingende Flächen des Rad-Schiene-Systems sind unter anderem die Innenseiten 20 der Räder 22 sowie die Außenseite 24 der Radachse 26 der Radsätze 18 sowie die Innen- und Außenseiten 28,30 der Stege 32 und Füße 34 der Schienen 16. Weitere schwingende Flächen sind die Laufflächen 36 der Räder 22 sowie die Abrollflächen 38 an den Schienenköpfen 40 der Schienen 16.

Soweit die zuvor beschriebenen Flächen funktional für das Rad-Schiene-System erforderlich sind, müssen sie aus sicherheitstechnischen Gründen unverändert bleiben. Anders sieht es hingegen mit den schwingenden Flächen aus, die für die Funktion des Rad-Schiene-Systems eine untergeordnete Rolle spielen. So können beispielsweise die Achse auf ihrer Außenseite sowie die Räder auf ihren Außen- und/oder Innenseiten, die Schienenstege und Schienenfüße mit einer Schwingungsabsorptionsbeschichtung versehen werden, die die Entstehung von Körperschall und als Folge davon von Luftschall eindämmt.

Erfindungsgemäß wird für die Schwingungsabsorptionsbeschichtung ein geschlossenzelliger Elastomerschaum 42 auf insbesondere PU-Basis verwendet. Dieser Elastomerschaum 42 wird insbesondere durch Aufsprühen in ein oder mehreren Schichten aufgetragen. Der Elastomerschaum 42 ist hochfest und elastisch. Er dichtet die Flächen gegenüber Feuchtigkeit ab, da seine geschlossenzellige Struktur das Eindringen von Feuchtigkeit verhindert. Der geschlossenzellige Elastomerschaum weist eine Klebefunktion auf, ist also als schaumbildender Klebstoff aus geschlossenzelligem Elastomermaterial ausgelegt. In diesem Ausführungsbeispiel ist der Elastomerschaum 42 etwa 10 bis 30 mm dick. Der Elastomerschaum 42 kann noch von einer (weiteren Schutz-) Schicht 44 überdeckt sein.

Zusammengefasst wird also mit der Erfindung ein System zur Absorption von Schwingungen/kinetische Energie durch Verformung von geschlossenzelligen Elastomerschaum vorgeschlagen, der fest mit der schwingenden Oberfläche verbunden ist. Der geschlossene Elastomerschaum ist ein sogenannter integraler Schaum, der eine geschlossene relativ dicke Haut bildet. Das erfindungsgemäße Elastomerschaumsystem lässt sich bzgl. seiner Startzeit einstellen, und zwar bis zu 60 sec. Das schäumbare Material lässt sich gießen, sprühen oder aufrakeln, Der geschlossenzellige Elastomerschaum entwickelt eine extrem starke Haftung insbesondere zu rauhen Oberflächen durch Eindringen in die Mikrostruktur und durch das Wirken von Van der Waalschen Kräften.

## Patentansprüche

1. Absorptionsbeschichtung auf schwingenden Oberflächen, insbesondere bei Schienenfahrzeugen und Schienenstrecken, mit
- einem in Schwingung versetzbaren Bauteil (16,18), das eine Oberfläche (20,24,28,30) aufweist, und
- einem geschlossenzelligen Elastomerschaum (42) auf zumindest einem Teilbereich der Bauteil-Oberfläche (20,24,28,30),
- wobei der Elastomerschaum (42) innerhalb des Teilbereichs mit der Oberfläche (20,24,28,30) des Bauteils (16,18) stoffschlüssig verbunden ist.

2. Absorptionsbeschichtung nach Anspruch 1, **dadurch gekennzeichnet, dass** der Elastomerschaum (42) mit der Oberfläche (20,24,28,30) des Bauteils (16,18) verklebt ist.

3. Absorptionsbeschichtung nach Anspruch 1 oder 2, **dadurch gekennzeichnet, dass** der Elastomerschaum (42) einen schaumbildenden Klebstoff auf elastomerem Material aufweist.

4. Absorptionsbeschichtung nach Anspruch 1 bis 3, **dadurch gekennzeichnet, dass** der Elastomerschaum (42) auf die Oberfläche (20,24,28,30) des Bauteils (16,18) insbesondere in mehreren Schichten aufgetragen, insbesondere aufgesprüht ist.

5. Absorptionsbeschichtung nach Anspruch 1 bis 3, **dadurch gekennzeichnet, dass** der Elastomerschaum (42) vorgeformt ist und mit der Oberfläche (20,24,28,30) des Bauteils (16,18) verklebt ist.

6. Absorptionsbeschichtung nach Anspruch 1 bis 5, **dadurch gekennzeichnet, dass** sich auf dem Elastomerschaum (42) eine Schutzschicht aus Elastomermaterial befindet.

7. Absorptionsbeschichtung nach Anspruch 1 bis 6, **dadurch gekennzeichnet, dass**
- das Bauteil eine Schienenfahrzeugachse (26) und die Oberfläche, die Umfangsseite (24) der Ache (26) ist,
- das Bauteil ein Schienenfahrzeugrad (22) und die Oberfläche die Innenseite (20) und/oder die Außenseite des Rades (22) ist,
- das Bauteil ein Wasserfahrzeugrumpf und die Oberfläche die Innen- und/oder Außenseite des Rumpfs oder einer Zwischenwand des Rumpfs ist,
- das Bauteil ein Karosserieteil, insbesondere Unterboden, eines Land-, Wasser- oder Luftfahrzeuges und die Oberfläche eine Seite des Karosserieteil ist,
- das Bauteil eine Schiene (16) und die Oberfläche die Innen- oder Außenseite (28,30) des Schienensteges (32) und/oder am Schienenfuß (34) angeordnet ist,
- das Bauteil eine Metall- Bahnschwelle und die Oberfläche eine Fläche an der Bahnschwelle oder an einem Doppel-T-Träger der Bahnschwelle ist,
- das Bauteil ein Maschinenteil und die Oberfläche eine Fläche des Maschinenteils ist,
- das Bauteil eine Schallschutzhaube, -schürze oder -kabine und die Oberfläche die Innen- und/oder Außenseite der Schallschutzhaube, - schürze bzw.-kabine ist,
- das Bauteil ein Baukörper wie z. B. Stahlbrückentrasse für eine Bahnstrecke oder ein Schotterkörper und die Oberfläche eine Seite des Baukörpers insbesondere die Unterseite der Stahlbrückentrasse bzw. die Oberseite des Schotterkörpers ist,
- das Bauteil ein dem Aufprall von Regentropen, Graupel oder Hagel aussetzbares Gebäudeteil wie z. B. eine Dachbedeckung oder ein Abdeckung für Horizontalflächen wie insbesondere eine Fensterbank und die Oberfläche die Innenseite bzw. Unterseite des Gebäudeteils insbesondere der Dachbedeckung und/oder der Fensterbank ist.
